# FASCICULE DE BREVET EUROPEEN

(11) **EP 3 652 007 B1**
(45) Date de publication et mention de la délivrance du brevet: **12.03.2025**
(21) Numéro de dépôt: 18759164.9
(22) Date de dépôt: 26.07.2018
(51) Int. Cl.: B60H 1/00, B60H 3/06

(54) **PULSEUR ET DISPOSITIF DE CHAUFFAGE, VENTILATION ET/OU CLIMATISATION POUR VEHICULE AUTOMOBILE CORRESPONDANT**
GEBLÄSE UND ENTSPRECHENDE HEIZUNGS-, LÜFTUNGS- ODER KLIMAANLAGE FÜR EIN KRAFTFAHRZEUG
BLOWER AND CORRESPONDING HEATING, VENTILATION AND/OR AIR CONDITIONING DEVICE FOR A MOTOR VEHICLE

(30) Priorité: 28.07.2017 FR 1757221
(43) Date de publication de la demande: 20.05.2020
(73) Titulaire: Valeo Systemes Thermiques, 78322 Le Mesnil Saint-Denis Cedex (FR)
(72) Inventeur: AILLOUD, Fabrice, 78322 Le Mesnil Saint-Denis Cedex (FR); PIERRES, Philippe, 78322 Le Mesnil Saint-Denis Cedex (FR); BARBIER, Thierry, 78322 Le Mesnil Saint-Denis Cedex (FR); LISKA, Jan, 26990 Rakovnik (CZ); GESELL, Bodo, 96476 Bad Rodach (DE)
(74) Mandataire: Valeo Systèmes Thermiques
(86) Numéro de dépôt international: PCT/FR2018/051919
(87) Numéro de publication internationale: WO 2019/020949

(56) Documents cités:
- EP-A1- 2 889 168
- WO-A1-2013/182710
- FR-A1- 3 014 029
- JP-A- 2003 326 939
- KR-A- 20030 052 492
- US-A1- 2014 335 774

## Description

### Domaine technique de l'invention

La présente invention concerne un pulseur d'aspiration destiné à un dispositif de chauffage, ventilation et/ou climatisation d'un véhicule automobile ainsi qu'un dispositif de chauffage, ventilation et/ou climatisation comportant un tel pulseur.

### État de la technique antérieur

Un véhicule automobile comporte un habitacle dans lequel débouche de l'air issu classiquement d'un dispositif de chauffage, ventilation et/ou climatisation.

Le dispositif de chauffage, ventilation et/ou climatisation, également connu sous sa dénomination anglaise HVAC (pour Heating, Ventilation and Air-Conditioning) peut être alimenté soit en air extérieur au véhicule (également appelé air frais), soit en air de recyclage, c'est-à-dire issu de l'habitacle du véhicule. De façon connue, un pulseur est mis en œuvre pour faire circuler le flux d'air. Il peut s'agir du flux d'air frais ou neuf provenant de l'extérieur du véhicule ou du flux d'air de recyclage provenant de l'habitacle du véhicule ou encore d'un mélange des flux d'air extérieur et recyclé.

Il est important de pouvoir dissocier les flux d'air (air extérieur - air de recyclage), en particulier lors du passage, des flux d'air au travers du dispositif de chauffage, ventilation et/ou climatisation, en fonction des besoins des occupants du véhicule, ou en d'autres termes lors du conditionnement thermique des flux d'air.

En effet, l'air de recyclage étant déjà à une température proche de la température de consigne à atteindre, il est ainsi possible d'atteindre rapidement la température souhaitée par l'utilisateur. Toutefois, l'air de recyclage est plus chargé en humidité que l'air provenant de l'extérieur du véhicule, si bien que si l'air de recyclage est dirigé à proximité du pare-brise par l'intermédiaire de bouches d'aération, situées en avant du conducteur ou du passager avant, par exemple, ou directement sur le pare-brise, l'humidité comprise dans l'air de recyclage se condense sur le pare-brise et crée de la buée.

Une solution connue consiste à conditionner thermiquement le flux d'air extérieur et à l'envoyer dans l'habitacle à proximité du pare-brise ou directement sur celui-ci, et à conditionner thermiquement le flux d'air de recyclage et à l'envoyer dans l'habitacle à distance du pare-brise, au niveau des autres bouches d'aération, telles que des sorties de bouches d'aération situées au niveau des pieds du conducteur ou passager avant. Il s'agit d'un mode de fonctionnement double nappe appelé « double layer » en anglais.

Des dispositifs de chauffage, ventilation et/ou climatisation connus comportent des moyens d'arrivée d'air comprenant un boîtier d'entrée d'air permettant l'entrée d'un ou plusieurs flux d'air distincts au sein du pulseur, et un organe de génération d'air tel qu'une turbine, par exemple cylindrique, configuré pour être entraînée en rotation autour de son axe de manière à pulser le ou les flux d'air.

Un tel pulseur est dénommé « mono-aspiration », car l'air pénètre dans le pulseur d'un seul côté de la turbine, à savoir du côté où est situé le boîtier et l'organe de séparation des flux d'air.

Afin de séparer deux flux d'air, notamment le flux d'air de recyclage et le flux d'air extérieur, le pulseur peut comporter un organe de séparation des flux d'air configuré pour délimiter un premier canal de circulation d'air permettant l'écoulement d'un premier flux d'air destiné à traverser une première partie axiale de la turbine et un deuxième canal de circulation d'air permettant l'écoulement d'un deuxième flux d'air destiné à traverser une deuxième partie axiale de la turbine. Cet organe de séparation des flux d'air définit un canal séparant les flux d'air en un flux central circulant à l'intérieur du canal formant le premier canal de circulation d'air, et un flux périphérique circulant à la périphérie du canal, le deuxième canal de circulation d'air s'étendant à l'extérieur de l'organe de séparation des flux d'air.

L'organe de séparation des flux d'air s'étend par exemple en partie dans l'espace interne de la turbine jusqu'à un point situé au-delà d'une extrémité de la turbine du côté du boîtier d'entrée d'air. Le boîtier d'entrée d'air recouvre cette extrémité de la turbine et l'organe de séparation des flux d'air.

Selon une solution connue, l'organe de séparation des flux d'air présente une extrémité amont ou supérieure située en partie inférieure du boîtier d'entrée d'air et de section sensiblement rectangulaire. L'extrémité amont présente une ouverture dans le prolongement du canal de l'organe de séparation des flux d'air formant le premier canal de circulation d'air. Cette ouverture est délimitée par deux plaques permettant le maintien de l'organe de séparation des flux d'air dans le pulseur.

Toutefois, ces plaques de maintien s'étendent sur toute la largeur de la section de passage d'air délimitée dans le boîtier d'entrée d'air, et avec cet agencement l'écoulement du flux d'air destiné à circuler à l'extérieur de l'organe de séparation des flux d'air n'est pas optimisé.

Par ailleurs, afin d'améliorer la qualité de l'air envoyé vers l'habitacle, il est connu de placer un filtre pour filtrer les particules présentes dans l'air, en amont du pulseur d'aspiration par exemple, ou en variante dans le pulseur en amont de la turbine et de l'organe de séparation des flux d'air.

Cependant dans cette dernière variante, les flux d'air, notamment le flux d'air de recyclage et le flux d'air extérieur dans un mode de fonctionnement dit « double layer », peuvent être mélangés au niveau de ce filtre. Un tel mélange des flux d'air a pour effet de dégrader les performances thermiques du dispositif de chauffage et/ou ventilation et/ou climatisation, notamment du fait de la présence d'air extérieur plus froid dans le flux d'air de recyclage à destination de sorties ou bouches d'aération situées au niveau des pieds du conducteur ou passager avant par exemple, ou encore d'augmenter les risques d'embuage du pare-brise par exemple, notamment du fait de la présence d'air de recyclage dans le flux d'air extérieur à destination de sorties ou bouches qui arrosent le pare-brise.

FR3014029A décrit un pulseur d'aspiration comprenant une turbine et des moyens de séparation du flux d'air destiné à former deux canaux séparés d'écoulement d'air dans deux parties axiales distinctes de la turbine. Les moyens de séparation comprennent un canal tubulaire. Un filtre est monté en amont de la turbine et de l'organe tubulaire.

### Exposé de l'invention

L'invention a pour objectif de pallier au moins partiellement ces problèmes de l'art antérieur en proposant une variante de pulseur permettant d'améliorer le partitionnement pour séparer les flux d'air et l'écoulement de ces flux d'air.

À cet effet, l'invention propose un pulseur selon la revendication 1

Selon l'invention, la cloison séparatrice présente une extrémité amont s'étendant dans le boîtier d'entrée d'air selon une direction d'extension principale orthogonale à l'axe d'extension de la sortie de volute et à l'axe de rotation de la turbine.

Autrement dit, l'extrémité amont de la cloison séparatrice s'étend dans le boîtier d'entrée d'air selon une direction d'extension principale orthogonale à l'axe d'écoulement d'au moins un flux d'air en sortie de la volute et à l'axe de rotation de la turbine.

Un tel agencement permet d'optimiser le cloisonnement / partitionnement entre les entrées d'air pour diriger des flux d'air, en particulier lorsqu'ils sont différents, de façon distincte vers la partie axiale de la turbine associée. On améliore ainsi le fonctionnement du pulseur et plus généralement du dispositif de chauffage et/ou ventilation et/ou climatisation intégrant un tel pulseur.

Ledit pulseur peut en outre comporter une ou plusieurs caractéristiques correspondant aux revendications dépendantes.

L'invention concerne également un dispositif de chauffage, ventilation et/ou climatisation comprenant un pulseur d'aspiration tel que décrit précédemment.

### Brève description des figures

D'autres caractéristiques et avantages de l'invention ressortiront à la lecture de la description qui suit, en référence aux figures annexées, parmi lesquelles :
- la figure 1 est une vue en perspective d'un pulseur selon l'invention ;
- la figure 2 est une autre vue en perspective du pulseur de la figure 1 ;
- la figure 3 est une vue schématique du pulseur de la figure 1 sur laquelle on a ôté un boîtier d'entrée d'air ;
- la figure 4 représente de façon schématique une vue de dessus du pulseur des figures 1 et 3,
- la figure 5a est une vue schématique selon une coupe axiale du pulseur et illustre un premier mode de fonctionnement ;
- la figure 5b est une vue schématique selon une coupe axiale du pulseur et illustre un deuxième mode de fonctionnement ; et
- la figure 5c est une vue schématique selon une coupe axiale du pulseur et illustre un troisième mode de fonctionnement.

Sur ces figures, les éléments identiques portent les mêmes références.

### Description détaillée des modes de réalisation

Les réalisations suivantes sont des exemples donnés à titre d'illustration de l'objet de l'invention. L'invention n'est pas limitée à ces modes de réalisation. Bien que la description se réfère à un ou plusieurs modes de réalisation, ceci ne signifie pas nécessairement que chaque référence concerne le même mode de réalisation, ou que les caractéristiques s'appliquent seulement à un mode de réalisation.

Dans la description on peut indexer certains éléments, autrement dit on peut par exemple mentionner un premier élément ou un deuxième élément. Dans ce cas, il s'agit d'un simple indexage pour différencier et dénommer des éléments proches mais non identiques. Cet indexage n'implique pas une priorité d'un élément, par rapport à un autre. On peut aisément interchanger de telles dénominations sans sortir du cadre de la présente invention.

### Pulseur

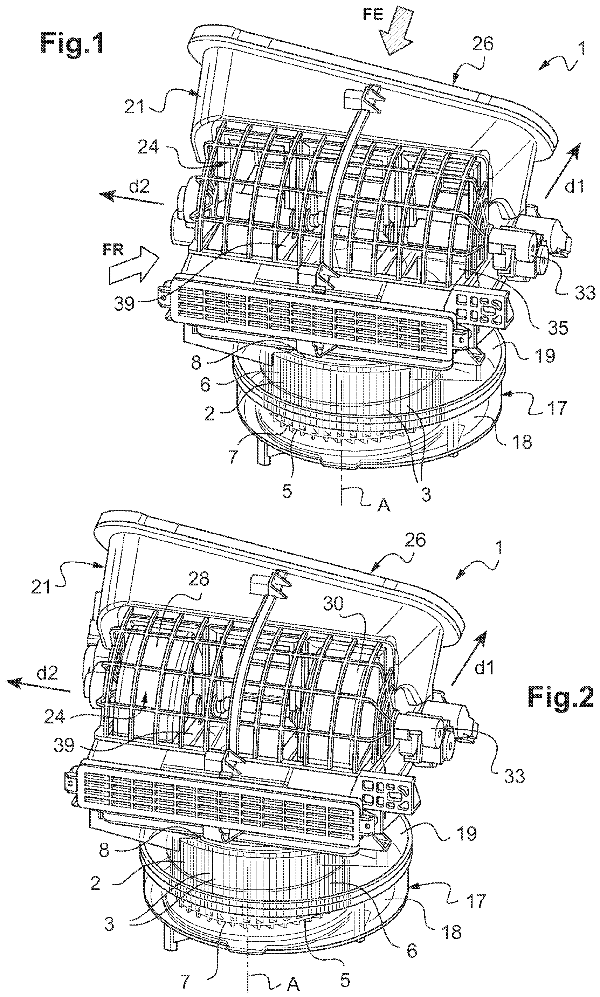

On a représenté sur les figures 1 et 2, un pulseur 1, notamment pour un dispositif de chauffage et/ou ventilation et/ou climatisation de véhicule automobile.

Le pulseur 1 d'aspiration comporte un organe de génération d'air tel qu'une turbine 2, destinée à être entraînée en rotation autour d'un axe A, notamment par un moteur électrique (non visible sur les figures), afin de pulser l'air. Le pulseur 1 comporte un boîtier, communément appelé volute 17, entourant la turbine 2.

Ce pulseur 1 comporte en outre un boîtier additionnel formant boîtier d'entrée d'air 21 permettant l'écoulement d'au moins deux flux d'air différents au sein du pulseur 1, par exemple d'un flux d'air de recyclage FR et d'un flux d'air extérieur FE, et au moins un organe de séparation des flux d'air.

La turbine 2 est par exemple de forme générale cylindrique, d'axe A. Dans la suite de la description, les termes axial et radial se rapportent à l'axe A.

La turbine 2 comporte des pales 3 à sa périphérie radialement externe et délimite intérieurement un espace cylindrique.

La turbine 2 comporte une première partie 6 axiale dite « partie haute » et une deuxième partie 5 axiale dite « partie basse ». La première partie 6 axiale s'étend depuis une première extrémité 7 de la turbine 2 jusqu'à une zone axialement médiane. La deuxième partie 5 axiale s'étend depuis la zone axialement médiane jusqu'à une deuxième extrémité 8, opposée à la première extrémité 7, de la turbine 2.

Un moyeu (non représenté) est généralement fixé à la turbine 2 et sert de déflecteur pour les flux d'air circulant. Le moyeu se présente, par exemple, sous la forme d'une pièce de révolution d'axe A.

Un arbre rotatif d'entraînement (non représenté) du moteur électrique est par exemple fixé au niveau d'une zone centrale du moyeu. En fonctionnement, le moteur entraîne en rotation le moyeu et la turbine 2.

Les termes haut et bas, ou, supérieur et inférieur, sont définis ici par référence aux figures et n'ont pas de caractère limitatif.

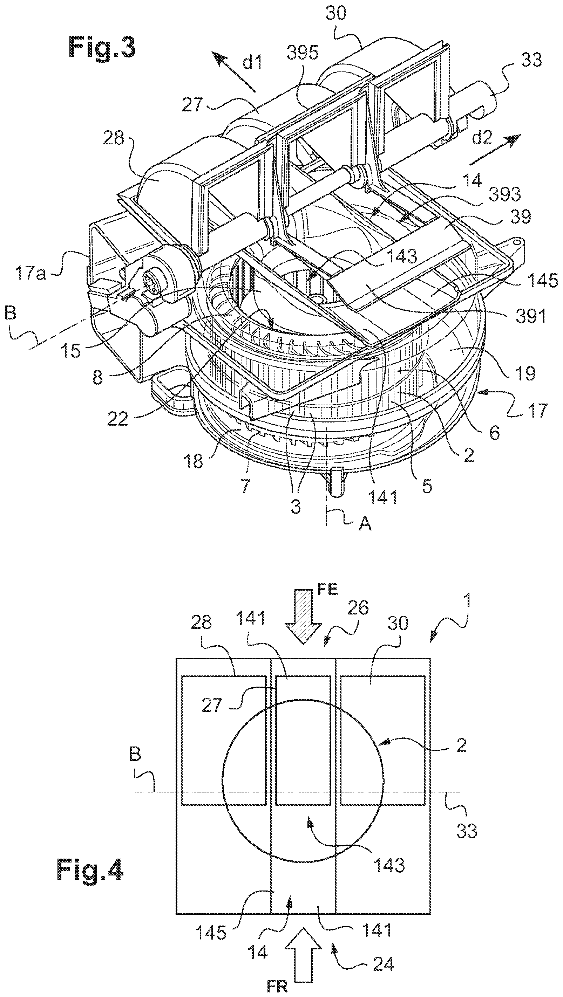

La volute 17 entourant la turbine 2, assure la canalisation du flux d'air pulsé. Plus précisément, un flux d'air est aspiré et mis en circulation par la turbine 2 puis est extrait de la volute 17 par une sortie 17a (partiellement représentée sur la figure 3), destinée à être raccordée à un conduit d'air du dispositif de chauffage, de ventilation et/ou de climatisation.

Selon le mode de réalisation décrit, la volute 17 définit une forme générale de spirale. La forme en spirale de la volute 17 présente donc une première partie d'enroulement(s). La forme de la volute 17 évolue ensuite de façon plus linéaire formant ainsi la sortie de volute 17a jusqu'à une ouverture de sortie d'air débouchant par exemple dans le conduit d'air du dispositif de chauffage, de ventilation et/ou de climatisation.

La sortie 17a de volute 17 se termine donc par cette ouverture de sortie d'air qui s'inscrit dans un plan, qui est représenté vertical en référence à la disposition sur la figure 3. À l'état assemblé dans le véhicule automobile, l'ouverture de sortie d'air peut s'inscrire notamment dans un plan suivant l'axe longitudinal du véhicule et l'axe vertical.

La sortie 17a de volute 17 évolue selon un axe B. Il s'agit d'un axe transversal au plan dans lequel s'inscrit l'ouverture de sortie d'air. La sortie 17a de volute 17 s'inscrit ici dans un cadre rectangulaire dont les dimensions évoluent le long de l'axe B.

L'axe B d'extension ou d'évolution de la sortie de volute 17a est orthogonale à l'axe A de rotation de la turbine 2 (tel que schématisé sur la figure 3).

De plus, le ou les flux d'air en sortie de la volute 17 s'écoulent suivant l'axe B.

Par ailleurs, la volute 17 peut entourer également au moins partiellement le moteur (non représenté).

La volute 17 comporte deux canaux 18, 19 s'étendant respectivement en regard des première et deuxième parties axiales 5, 6 de la turbine 2. Au vu de la disposition sur les figures 1 à 3, le canal 18 forme un canal inférieur en regard de la partie basse 5 de la turbine 2, et le canal 19 un canal supérieur en regard de la partie haute 6 de la turbine 2.

La volute 17 peut comporter en outre une paroi de séparation (non visible sur les figures), par exemple de forme annulaire, permettant de délimiter les deux canaux 18, 19. La paroi de séparation peut être agencée de manière à séparer la volute 17 en deux moitiés, avantageusement égales.

La volute 17 comprend une ouverture supérieure 22 permettant le passage d'au moins un flux d'air au sein du pulseur 1. Cette ouverture supérieure 22 est mieux visible sur la figure 3.

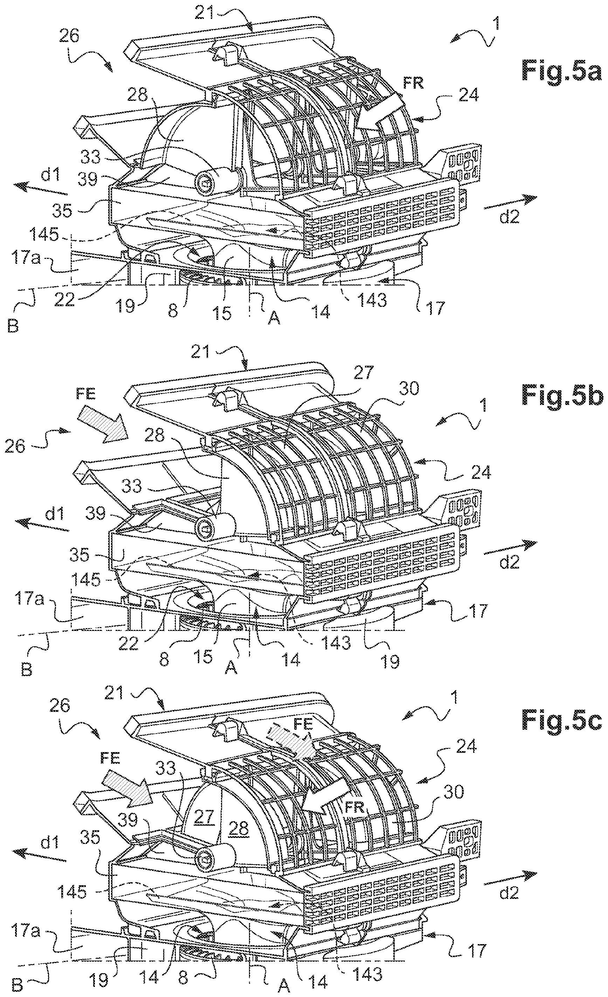

En référence aux figures 5a à 5c, le boîtier d'entrée d'air 21 est fixé au-dessus de l'ouverture supérieure 22 de la volute 17.

Le boîtier d'entrée d'air 21 comprend un espace interne. L'espace interne délimite une section de passage d'air. L'espace interne du boîtier d'entrée d'air 21 est ouvert vers le bas en référence à la disposition sur les figures 5a à 5c, c'est-à-dire ouvert du côté de la turbine 2.

La section de passage d'air est délimitée par une première dimension d1 qui correspond à la profondeur, une deuxième dimension d2 qui correspond à la largeur, et la hauteur selon l'axe A. Les directions des dimensions d1 et d2 sont schématisées par des flèches sur les figures 1 à 3.

En se référant plus particulièrement à la figure 3, la deuxième dimension d2 s'étend ici parallèlement ou sensiblement parallèlement à l'axe B de la sortie de volute 17a. La première dimension d1 s'étend selon une direction orthogonale à l'axe B d'extension de la sortie de volute 17a.

Par ailleurs, le boîtier d'entrée d'air 21 comprend au moins deux entrées d'air 24, 26 distinctes, pour permettre l'écoulement des flux d'air différents, notamment du flux d'air de recyclage FR et du flux d'air extérieur FE, au sein du pulseur 1.

En se référant de nouveau aux figures 1 et 2, les entrées d'air 24, 26 s'étendent de façon consécutive dans le sens de la profondeur d1 du boîtier d'entrée d'air 21. Chaque entrée d'air 24, 26 s'étend sur toute la largeur d2 du boîtier d'entrée d'air 21 et sur une partie seulement dans le sens de la profondeur d1.

L'entrée d'air 24 correspond à une ouverture pour le passage du flux d'air de recyclage FR et est désignée par la suite entrée d'air de recyclage 24. L'entrée d'air 26 correspond à une ouverture pour le passage du flux d'air extérieur FE et est désignée par la suite entrée d'air extérieur 26. Bien entendu, les entrées d'air 24 et 26 peuvent être inversées.

Afin de gérer l'entrée des différents flux d'air, le boîtier d'entrée d'air 21 comprend en outre des moyens ou organes de guidage d'air 27, 28, 30 (voir figures 2 et 3). Les organes de guidage d'air 27, 28, 30 peuvent diriger des flux d'air de types différents, notamment le flux d'air de recyclage et le flux d'air extérieur, pour des modes de fonctionnement différents. En particulier, ils permettent de diriger un flux d'air dans un premier canal de circulation d'air, et plus généralement vers la première partie 6 axiale de la turbine 2, et/ou dans un deuxième canal de circulation d'air, et plus généralement vers la deuxième partie 5 axiale de la turbine 2.

Les organes de guidage d'air comportent un ou plusieurs volets 27, 28, 30 mobiles.

En particulier, il peut s'agir de volets tambour, papillon ou drapeau. Un volet papillon correspond à un volet comprenant au moins une pale ou paroi latérale et un arbre de rotation situé au centre du volet, par exemple dans le cas où il y aurait deux parois latérales, l'arbre de rotation est agencé entre les deux parois latérales. Un volet drapeau correspond à un volet comprenant au moins une pale et un arbre de rotation situé à une extrémité du volet. Un volet tambour correspond à un volet comprenant deux parois latérales inscrites dans deux plans distincts et parallèles entre eux avec une paroi incurvée servant à empêcher le passage du flux d'air reliant les deux parois latérales et un arbre de rotation servant à induire le mouvement de rotation via un actionneur relie également les deux parois latérales. Autrement dit, la paroi incurvée et l'arbre de rotation forment une continuité de matière entre les deux parois latérales.

Les organes de guidage d'air comprennent ici, plusieurs volets (mieux visibles sur la figure 3), au moins
trois volets, dont un volet central 27, et deux volets latéraux 28 et 30 de part et d'autre du volet central 27. Il s'agit avantageusement de volets de même nature, tels que des volets tambour.

Le volet central 27 et les volets latéraux 28, 30 sont agencés entre l'entrée d'air de recyclage 24 et l'entrée d'air extérieur 26 de manière à être aptes à obturer au moins partiellement ou entièrement ces deux entrées d'air 24, 26 selon le mode de fonctionnement.

Le volet central 27 et les volets latéraux 28, 30 sont agencés de manière à être entraînés en rotation autour d'un axe de pivotement. L'axe de pivotement est
un axe commun 33 pour les trois volets 27, 28, 30. Autrement dit, les trois volets 27, 28, 30 sont coaxiaux et mobiles autour d'un unique axe de pivotement 33.
L'axe de pivotement 33 est orthogonale par rapport à l'axe A de rotation de la turbine 2. L'axe
de pivotement 33 est parallèle à l'axe B, qui correspond à l'axe d'extension de la sortie de volute 17a ou autrement dit à l'axe d'écoulement d'au moins un flux d'air en sortie de la volute 17.

Par ailleurs, en se référant à la vue de dessus, comme schématisé de façon symbolique sur la figure 4, l'axe de pivotement 33 est orthogonal
à la direction générale d'entrée des flux d'air
extérieur FE et de recyclage FR.

Les volets 27, 28 et 30 s'étendent chacun non pas sur la totalité de la largeur d2 de la section de passage d'air, mais chacun sur une portion, notamment un tiers, de la largeur d2 de la section de passage d'air dans le boîtier d'entrée d'air 21. Autrement dit, ces volets 27, 28, 30 sont agencés selon trois rangées entre l'arrivée d'air extérieur 26 et l'arrivée d'air de recyclage 24.

Chaque volet 27, 28, 30 a une course entre deux positions extrêmes, une première position extrême, dans laquelle le volet obture l'entrée d'air extérieur 26, et une deuxième position extrême, dans laquelle le volet obture l'entrée d'air de recyclage 24.

Dans chaque position extrême, les volets latéraux 28, 30 viennent en appui contre au moins une butée, par exemple au niveau de rebords, de parois d'appui, tels qu'une paroi incurvée, une paroi plane, ou encore une butée surmoulée sur une paroi plane, du boîtier d'entrée d'air 21.

Bien entendu, l'invention n'est pas limitée à ce mode de réalisation des organes de guidage d'air avec trois volets tambours 27, 28, 30 coaxiaux mobiles autour d'un unique axe de pivotement. Notamment, on peut envisager plus de trois volets, des volets de natures différentes.

À titre d'exemple non limitatif, on peut envisager une variante non représentée avec six volets papillons agencés à la place des trois volets tambours.

Par ailleurs, le pulseur 1, et notamment les organes de guidage d'air comprennent en outre des moyens de cinématique entre leur course respective de manière à synchroniser les déplacements d'au moins certains volets limitant ainsi le nombre d'actionneurs nécessaires. Les moyens de cinématique comprennent par exemple des chemins de came avec plusieurs pignons de sorties, des bielles de connexions entre les volets, etc. Un actionneur commun peut notamment piloter les volets simultanément.

En se référant de nouveau aux figures 1 à 3, le ou les organes de séparation des flux d'air permettent, quant à eux, de séparer un premier flux d'air destiné à traverser la première partie 6 axiale de la turbine 2 et un deuxième flux d'air destiné à traverser la deuxième partie 5 axiale de la turbine 2. Ils sont notamment configurés pour délimiter :
- le premier canal de circulation d'air permettant l'écoulement du premier flux d'air et
- le deuxième canal de circulation d'air permettant l'écoulement du deuxième flux d'air. Le ou les organes de séparation des flux d'air sont agencés fixes dans le pulseur 1.

Le
ou les organes de séparation des flux d'air comportent une cloison séparatrice 14 permettant de séparer le premier flux d'air et le deuxième flux d'air, cette cloison séparatrice 14 étant mieux visible sur la figure 3.

La cloison séparatrice 14 est montée au sein du pulseur 1 et s'étend au moins en partie dans l'espace interne de la turbine 2.

La cloison séparatrice 14 s'étend par exemple depuis une zone médiane de la turbine 2 entre les deux parties axiales 5, 6 en direction du boîtier d'entrée d'air 21 (non visible sur la figure 3). Dans cet exemple, la cloison séparatrice 14 s'étend depuis la zone médiane de la turbine 2 jusqu'à un point situé au-delà de la deuxième extrémité 8.

La cloison séparatrice 14 est montée fixe par rapport à la volute 17. Il peut s'agir d'une pièce rapportée ou moulée avec la volute 17.

Par ailleurs, il s'agit d'un organe creux définissant un canal de contour fermé.

La cloison séparatrice 14 est agencée de manière à séparer les flux d'air en un flux central circulant à l'intérieur de la cloison séparatrice 14 et un flux périphérique circulant autour de la cloison séparatrice 14. Le flux central correspond au premier flux d'air. Le flux périphérique correspond au deuxième flux d'air.

Autrement dit, la cloison séparatrice 14 délimite un canal interne formant au moins une partie du premier canal de circulation d'air, le deuxième canal de circulation d'air s'étendant à l'extérieur de la cloison séparatrice 14.

La cloison séparatrice 14 présente avantageusement une forme de révolution. Cette cloison séparatrice 14 peut être coaxiale à la turbine 2. Dans ce cas, la cloison séparatrice 14 présente une forme de révolution autour de l'axe A de rotation de la turbine 2.

Le diamètre de la cloison séparatrice 14 est avantageusement choisi pour garantir la répartition des flux d'air lorsqu'ils sont différents, dans la volute 17 et par la suite dans le véhicule automobile, dans des proportions voulues, par exemple de façon non limitative de l'ordre de 60% dans le canal supérieur 19 et de l'ordre de 40% dans le canal inférieur 18.

La cloison séparatrice 14 peut présenter une forme générale au moins en partie évasée pour diriger les flux d'air vers les pales 3 de la turbine 2.

À titre d'exemple, la cloison séparatrice 14 peut comporter une partie haute ou amont 15 cylindrique ou tubulaire. La partie haute 15 cylindrique s'étend entre la deuxième extrémité 8 de la turbine 2 et une partie inférieure du boîtier d'entrée d'air 21.

La cloison séparatrice 14 peut présenter également une partie basse ou avale (non visible sur les figures) s'évasant vers le bas. Autrement dit, la partie basse, et plus généralement la cloison séparatrice 14, s'évase de l'amont vers l'aval. Les termes amont et aval sont définis en référence au sens d'écoulement de l'air à travers le pulseur 1. Une telle partie basse peut s'étendre entre la deuxième extrémité 8 de la turbine 2 et la zone axialement médiane de la turbine 2. La partie basse peut présenter une forme de révolution d'axe A. Avantageusement, la périphérie radiale de la partie basse est inférieure à la périphérie radiale des pâles 3 de la turbine 2, de manière à ne pas gêner la rotation des pales 3.

La cloison séparatrice 14 comporte une extrémité amont 141. Cette extrémité amont 141 termine notamment la partie haute 15 du côté opposé à la partie basse 16.

L'extrémité amont 141 s'étend dans le boîtier d'entrée d'air 21, notamment dans la partie inférieure du boîtier d'entrée d'air 21.

L'extrémité amont 141 s'étend sur toute la première dimension ou profondeur dl et sur une partie seulement de la deuxième dimension ou largeur d2. Ainsi, de l'air peut s'écouler dans les passages latéraux situés entre la surface externe de la cloison séparatrice 14 et la paroi interne du boîtier d'entrée d'air 21 ou le bord de l'ouverture supérieure 22 de la volute 17 (figure 3).

Cette extrémité amont 141 est par exemple de section sensiblement rectangulaire. L'extrémité amont 141 présente une ouverture 143, notamment centrale, dans le prolongement du canal interne de la cloison séparatrice 14 formant au moins une partie du premier canal de circulation d'air. Cette ouverture 143 est délimitée par deux plaques de maintien 145 permettant le maintien de la cloison séparatrice 14 dans le pulseur 1.

À l'état monté dans la volute 17, l'extrémité amont 141, en particulier ses plaques de maintien 145 viennent en appui contre la volute 17, plus précisément contre une paroi ou un rebord supérieur de la volute 17.

Suivant la deuxième dimension d2 du boîtier d'entrée d'air, les plaques de maintien 145 présentent une étendue similaire à l'étendue du volet central 27. En d'autres termes, la largeur des plaques de maintien 145 est égale ou sensiblement égale à la largeur du volet central 27. L'extrémité amont 141 de la cloison séparatrice 14 peut être raccordée à la partie haute cylindrique 15 par une zone de raccordement progressive.

L'ouverture supérieure 22 de la volute 17 permet le passage de la cloison séparatrice 14, en particulier de la partie haute 15. L'espace interne du boîtier d'entrée d'air 21 permet l'entrée d'air dans la cloison séparatrice 14 et/ou dans la turbine 2 via l'ouverture supérieure 22. Ainsi, les flux d'air peuvent s'écouler au sein de la cloison séparatrice 14 ainsi que dans des passages latéraux situés entre la surface externe de la cloison séparatrice 14 et le bord de l'ouverture supérieure 22 de la volute 17.

Selon le mode de réalisation décrit, le flux périphérique d'air circulant autour de la cloison séparatrice 14 alimente le canal supérieur 19 de la volute 17. Le flux central en provenance de l'intérieur de la cloison séparatrice 14 alimente le canal inférieur 18 de la volute 17.

En outre, le ou les organes de séparation des flux d'air comportent encore une cloison séparatrice 39 additionnelle, mieux visible sur la figure 3.

La cloison séparatrice 39 additionnelle est agencée dans le boîtier d'entrée d'air 21 de manière à entourer au moins partiellement une région d'extrémité du volet central 27 dans une position extrême.

Avantageusement, la cloison séparatrice 39 additionnelle présente au moins une butée contre laquelle le volet central 27 peut terminer sa course, de manière à permettre une obturation étanche de l'entrée d'air extérieur 26 ou de l'entrée d'air de recyclage 24.

Selon l'invention, la cloison séparatrice 39 additionnelle présente un cadre 391 formant une base.
Ce cadre 391 s'étend principalement selon une direction d'extension orthogonale à l'axe B d'extension de la sortie de volute 17a, ou autrement dit orthogonale à l'axe d'écoulement d'au moins un flux d'air en sortie de la volute 17.

Le cadre 391 est agencé en regard de l'extrémité amont 141 de la cloison séparatrice 14. Le cadre 391 est de forme complémentaire à la forme de l'extrémité amont 141 de la cloison séparatrice. En particulier, le cadre 391 présente un contour de forme similaire à l'extrémité amont 141, dans cet exemple de forme sensiblement rectangulaire. Les dimensions du cadre 391 sont par exemple égales ou sensiblement égales aux dimensions de l'extrémité amont 141. À chaque position extrême, le volet central 27 vient terminer sa course contre les côtés latéraux, notamment les petits côtés latéraux du cadre 391.

Le cadre 391 délimite un évidement 393 intérieur. Cet évidement 393 permet le passage de l'air.

Selon le mode de réalisation décrit, la cloison séparatrice 39 additionnelle est symétrique par rapport à l'axe de pivotement 33.

La cloison séparatrice 39 additionnelle comporte encore une ceinture 395 qui s'étend à l'aplomb de l'une des faces du cadre 391, par exemple depuis une région centrale ou sensiblement centrale du cadre 391. Cette ceinture 395 délimite un évidement intérieur. La ceinture 395 est configurée de manière à entourer le volet central 27, et plus précisément une région d'extrémité du volet central 27 lorsqu'il est dans l'une ou l'autre des positions extrêmes. La forme de la ceinture 395 de la cloison séparatrice 39 additionnelle est complémentaire de la forme du volet central 27, en particulier de la section transversale du volet central 27.

La cloison séparatrice 39 additionnelle, et en particulier la ceinture 395 assure une séparation d'avec les volets latéraux 28, 30.

Afin d'améliorer la qualité de l'air, le boîtier d'entrée d'air 21 peut comprendre en outre au moins un filtre 35 (voir figures 5a à 5c). Ce filtre 35 est destiné à être traversé par le premier et le deuxième flux d'air. Le filtre 35 est donc agencé en aval des entrées d'air 24, 26 selon la direction d'écoulement de l'air dans le boîtier d'entrée d'air 21.

Il peut s'agir notamment d'un média plissé.

Le filtre 35 est monté dans le boîtier d'entrée d'air 21, notamment dans la partie inférieure du boîtier d'entrée d'air 21, en occupant toute ou quasiment toute la largeur d2 et la profondeur d1 de la section de passage d'air dans l'espace interne du boîtier d'entrée d'air 21. De façon générale, le filtre 35 est agencé axialement entre la cloison séparatrice 14 et les entrées d'air 24, 26. Selon la variante de réalisation illustrée sur les figures 5a à 5c, le filtre 35 est monté axialement entre d'une part la cloison séparatrice 14 et d'autre part la cloison séparatrice 39 additionnelle, et notamment également les volets coaxiaux 27, 28, 30.

Un tel filtre 35 peut être démonté facilement, en ouvrant ou en retirant le boîtier d'entrée d'air 21 accessible par exemple depuis la boîte à gants du véhicule.

Sur les figures, le filtre 35 est représenté par un filtre de forme générale rectangulaire. Bien entendu, cette forme n'est pas limitative. Le filtre 35 peut être un filtre plan ou arrondi.

Dans le cas d'un filtre 35 rectangulaire, il s'étend dans le sens de la longueur suivant la deuxième dimension d2 et dans le sens de la largeur suivant la première dimension d1. L'extrémité amont 141 de la cloison séparatrice 14 s'étend alors suivant toute la largeur du filtre 35 et sur une partie seulement de la longueur du filtre 35.

En variante, le filtre 35 peut ne pas être agencé dans le boîtier d'entrée d'air 21 mais être agencé ailleurs dans le dispositif de chauffage et/ou ventilation et/ou climatisation. À titre d'exemple non limitatif, dans ce cas, le filtre 35 peut être placé en amont d'un échangeur thermique du dispositif de chauffage et/ou ventilation et/ou climatisation tel qu'un évaporateur. Avantageusement, le filtre 35 comporte des guides d'air (non représentés sur les figures), comprenant par exemple une ou plusieurs cloisons ou bandes de séparation, permettant de limiter voire d'empêcher le mélange entre les flux d'air, notamment dans un fonctionnement du pulseur 1 dans lequel des flux d'air distincts sont aspirés. Les guides d'air peuvent être des pièces rapportées sur le filtre 35. Ces guides d'air sont positionnés dans la continuité des grands côtés de la cloison séparatrice 39 additionnelle, de façon à partitionner les flux d'air en provenance des entrées d'air distinctes 24 et 26 du boîtier d'entrée d'air 11. En variante, on peut agencer plusieurs filtres distincts, par exemple trois filtres.

Dans le cas où le filtre 35 ne serait pas agencé dans le boîtier d'entrée d'air 21, on peut envisager, que la cloison séparatrice 39 additionnelle et la cloison séparatrice 14 soient réalisées d'une seule pièce.

### Fonctionnement du pulseur

Le pulseur 1 peut fonctionner selon plusieurs modes de fonctionnement, dont notamment :
- un premier mode appelé 100% recyclage (figure 5a), selon lequel seul l'air de recyclage FR est aspiré au sein du pulseur 1,
- un deuxième mode appelé 100% frais (figure 5b), selon lequel seul l'air extérieur FE est aspiré au sein du pulseur 1, ou encore
- un troisième mode 50/50 (figure 5c), selon lequel de l'air extérieur FE et de l'air de recyclage FR sont aspirés au sein du pulseur 1.

### Mode 100% recyclage

La figure 5a illustre le premier mode de fonctionnement, 100% recyclage, dans lequel seul l'air de recyclage FR est aspiré au sein du pulseur 1, de manière à alimenter le dispositif de chauffage, ventilation et/ou de climatisation en air de recyclage FR. Un tel mode de fonctionnement peut par exemple être utilisé en cas de climatisation de l'air (par exemple en été). En effet, dans un tel cas, l'humidité présente dans l'air de l'habitacle a tendance à se condenser lors de son passage dans l'évaporateur permettant le refroidissement de l'air. Cet air de recyclage n'est donc pas ou peu chargé en humidité et peut être envoyé dans l'habitacle, notamment à proximité du pare-brise.

Dans ce mode de fonctionnement, les volets coaxiaux 27, 28, 30 sont dans la première position extrême d'obturation de l'entrée d'air extérieur 26, et laissent libre l'entrée d'air de recyclage 24.

De la sorte, le flux d'air extérieur FE ne peut pas s'écouler au sein du pulseur 1, tandis que le flux d'air de recyclage FR peut s'écouler au sein du pulseur 1 à travers l'entrée d'air de recyclage 24.

Ainsi, en se référant également aux figures 1 à 3, au moins une partie du flux d'air de recyclage FR, correspondant à l'air prélevé dans l'habitacle, pénètre donc par l'entrée d'air de recyclage 24, traverse la cloison séparatrice 39 additionnelle, le filtre 35, la cloison séparatrice 14, la partie basse 5 de la turbine 2, et pénètre dans le canal 18, ce dernier débouchant par exemple dans l'habitacle du véhicule à distance du pare-brise. Parallèlement, une autre partie du flux d'air de recyclage FR en provenance de l'entrée d'air de recyclage 24, traverse le filtre 35 et les passages latéraux situés entre la surface externe de la cloison séparatrice 14 et le bord de l'ouverture supérieure 22 de la volute 17, la partie haute 6 de la turbine 2 et pénètre dans le canal 19, ce dernier débouchant par exemple dans l'habitacle du véhicule à proximité ou directement en regard du pare-brise.

En clair, le flux d'air de recyclage FR s'écoule à la fois à travers le premier canal de circulation et le deuxième canal de circulation avant de déboucher dans l'habitacle.

### Mode 100% frais

La figure 5b illustre le deuxième mode de fonctionnement, 100% frais, dans lequel seul l'air extérieur FE est aspiré au sein du pulseur 1, de manière à alimenter le dispositif de chauffage, ventilation et/ou de climatisation en air extérieur. Un tel mode de fonctionnement peut par exemple être utilisé en cas de chauffage de l'air extérieur (par exemple en hiver ou à la misaison) tout en évitant que trop de buée ne se forme sur le pare-brise.

Dans ce mode de fonctionnement, les volets coaxiaux 27, 28, 30 sont dans la deuxième position extrême d'obturation de l'entrée d'air de recyclage 24, et laissent libre l'entrée d'air extérieur 26.

De la sorte, le flux d'air extérieur FE peut s'écouler au sein du pulseur 1 tandis que le flux d'air de recyclage FR ne peut pas s'écouler au sein du pulseur 1.

Dans ce cas, en se référant également aux figures 1 à 3, le flux d'air extérieur FE entrant depuis l'entrée d'air extérieur 26, traverse la cloison séparatrice 39 additionnelle, le filtre 35, la cloison séparatrice 14, la partie basse 5 de la turbine 2, et pénètre dans le canal 18, ce dernier débouchant dans l'habitacle du véhicule, par exemple à distance du pare-brise.

Parallèlement, le flux d'air extérieur FE s'écoule également, via l'extérieur de la cloison séparatrice 14, dans la partie haute 6 de la turbine 2 et pénètre dans le canal 19 ce dernier débouchant dans l'habitacle du véhicule, par exemple à proximité ou directement en regard du pare-brise.

En clair, le flux d'air extérieur FE s'écoule à la fois à travers le premier canal de circulation et le deuxième canal de circulation avant de déboucher dans l'habitacle.

### Mode 50/50

La figure 5c illustre le troisième mode de fonctionnement, 50/50, dans lequel de l'air extérieur FE et de l'air de recyclage FR sont aspirés au sein du pulseur 1, de manière à alimenter le dispositif de chauffage, ventilation et/ou de climatisation en air extérieur et de recyclage, le pulseur 1 permettant de générer deux flux d'air distincts. Un tel mode de fonctionnement peut par exemple être utilisé en cas de chauffage de l'air (par exemple en hiver ou à la mi- saison) et permet de réduire le temps nécessaire pour atteindre une température de consigne, la température de l'air prélevé dans l'habitacle étant supérieure à la température de l'air externe, sans que trop de buée ne se forme sur le pare-brise.

Pour ce mode de fonctionnement, les organes de guidage d'air permettent de diriger le premier flux d'air, ici le flux d'air de recyclage FR, dans le premier canal de circulation d'air et le deuxième flux d'air, ici le flux d'air extérieur FE, dans le deuxième canal de circulation d'air. Dans ce mode de fonctionnement, le volet central 27 est dans la première position extrême d'obturation de l'entrée d'air extérieur 26. Les volets latéraux 28, 30 sont dans la deuxième position extrême d'obturation de l'entrée d'air de recyclage 24.

De la sorte, le flux d'air extérieur FE peut s'écouler au sein du pulseur 1 à travers l'entrée d'air extérieur 26 pour être guidé vers l'extérieur de de la cloison séparatrice 14, et le flux d'air de recyclage FR peut également s'écouler dans le pulseur 1 à travers le volet central 27 qui guide le flux d'air de recyclage FR en direction de l'intérieur de la cloison séparatrice 39 additionnelle puis de la cloison séparatrice 14.

Dans ce mode de fonctionnement, les flux d'air sont séparés en un flux central qui est le flux d'air de recyclage FR et un flux périphérique qui est le flux d'air extérieur FE.

Ainsi, en se référant également aux figures 1 à 3, le flux d'air de recyclage FR traverse la cloison séparatrice 39 additionnelle, le filtre 35 et la cloison séparatrice 14, la partie basse 5 de la turbine 2, et pénètre dans le canal 18, ce dernier débouchant par exemple dans l'habitacle du véhicule à distance du pare-brise. Parallèlement, le flux d'air extérieur FE s'écoule, via l'extérieur de la cloison séparatrice 14, dans la partie haute 6 de la turbine 2 et pénètre dans le canal 19, ce dernier débouchant par exemple dans l'habitacle du véhicule à proximité ou directement en regard du pare-brise.

Ainsi, l'extrémité amont 141 de la cloison séparatrice 14 est tournée d'environ 90° par rapport aux solutions de l'art antérieur. L'extrémité amont 141 s'étend donc dans le sens de la profondeur du boîtier d'entrée d'air 21 qui correspond également au sens de la largeur du filtre 35 lorsqu'il est prévu, et non plus dans le sens de la longueur du filtre 35 comme dans les solutions de l'art antérieur.

Avec cet agencement, les trois volets coaxiaux 27, 28, 30 en complément de la cloison séparatrice 14 assurent le partitionnement du boîtier d'entrée d'air en trois parties distinctes, séparées par les volets et coaxiaux 27, 28, 30 et la cloison séparatrice 39 additionnelle. Les volets coaxiaux 27, 28, 30 permettent de limiter le nombre de cloisons pour séparer les flux d'air.

Enfin, le partitionnement obtenu avec les cloisons séparatrices 14, 39 selon cette solution permet de limiter le mélange entre les flux d'air lorsqu'ils sont différents et réduire ainsi les risques d'embuage en mode de fonctionnement 50/50.

Il doit être bien entendu toutefois que ces exemples de réalisation sont donnés à titre d'illustration de l'objet de l'invention. L'invention n'est pas limitée à ces modes de réalisation décrits précédemment et fournis uniquement à titre d'exemple. Elle englobe diverses modifications, formes alternatives et autres variantes que pourra envisager l'homme du métier dans le cadre de la présente invention telle que définie dans les revendications.

## Revendications

1. Pulseur (1) d'aspiration, notamment pour un dispositif de chauffage, ventilation et/ou climatisation d'un véhicule automobile, le pulseur (1) comprenant :
- une turbine (2) configurée pour être entrainée en rotation autour d'un axe (A) et présentant au moins une première partie (6) dite « partie haute » et une deuxième partie (5) dite « partie basse »,
- une volute (17) entourant la turbine (2) et présentant une sortie de volute (17a) s'étendant principalement selon un axe (B),
- un boîtier d'entrée d'air (21) présentant au moins deux entrées d'air (24, 26) distinctes, et
- une cloison séparatrice (14) s'étendant de façon à séparer un premier flux d'air destiné à traverser la première partie axiale (6) de la turbine (2) et un deuxième flux d'air destiné à traverser la deuxième partie axiale (5) de la turbine (2),
**caractérisé en ce que** la cloison séparatrice (14) présente une extrémité amont (141) s'étendant dans le boîtier d'entrée d'air (21) selon une direction d'extension principale orthogonale à l'axe (B) d'extension de la sortie de volute (17a) et à l'axe de rotation (A) de la turbine (2), et dans lequel :
- le boîtier d'entrée d'air (21) comprend un espace interne délimitant une section de passage d'air ayant une première dimension (d1) selon une direction orthogonale à l'axe (B) d'extension de la sortie de volute (17a) et une deuxième dimension (d2) parallèle à l'axe (B) d'extension de la sortie de volute (17a), et dans lequel
- l'extrémité amont (141) de la cloison séparatrice (14) s'étend sur toute la première dimension (d1) et sur une partie de la deuxième dimension (d2),
- le pulseur comprenant au moins trois volets (27, 28, 30) coaxiaux, dont un volet central (27) et deux volets latéraux (28, 30) agencés de part et d'autre du volet central (27), lesdits volets coaxiaux (27, 28, 30) étant agencés entre lesdites deux entrées d'air (24, 26) distinctes du boîtier d'entrée d'air (21), de façon mobile autour d'un axe de pivotement (33) parallèle à l'axe (B) d'extension de la sortie de volute (17a),
- lesdits volets coaxiaux (27, 28, 30) étant chacun agencés mobiles entre une première position extrême, dans laquelle ledit volet (27, 28, 30) obture une entrée d'air (26), et une deuxième position extrême, dans laquelle ledit volet (27, 28, 30) obture l'autre entrée d'air (24),
- le pulseur comportant en outre une cloison séparatrice (39) additionnelle agencée dans le boîtier d'entrée d'air (21) de manière à entourer au moins partiellement une région d'extrémité du volet central (27) dans une position extrême,
- la cloison séparatrice (39) additionnelle présentant un cadre (391) s'étendant principalement selon une direction d'extension orthogonale à l'axe (B) d'extension de la sortie de volute (17a), et à l'aplomb duquel s'étend une ceinture (395) de manière à entourer au moins partiellement une région d'extrémité du volet central (27) dans une position extrême, le cadre (391) étant agencé en regard de l'extrémité amont (141) de la cloison séparatrice (14), le cadre (391) étant de forme complémentaire à la forme de l'extrémité amont (141) de la cloison séparatrice (39).

2. Pulseur (1) d'aspiration selon la revendication précédente, dans lequel le cadre (391) de la cloison séparatrice (39) additionnelle présente au moins une butée contre laquelle le volet central (27) est configuré pour venir en butée dans une position extrême.

3. Pulseur (1) d'aspiration selon l'une des revendications précédentes, comportant en outre un filtre (35) agencé axialement entre la cloison séparatrice (14) et la cloison séparatrice (39) additionnelle.

4. Dispositif de chauffage, ventilation et/ou climatisation **caractérisé en ce qu'**il comprend un pulseur (1) d'aspiration selon l'une quelconque des revendications précédentes.

## Patentansprüche

1. Ansauggebläse (1), insbesondere für eine Heizungs-, Lüftungs- und/oder Klimatisierungsvorrichtung eines Kraftfahrzeugs, wobei das Gebläse (1) umfasst:
- ein Laufrad (2), das dazu ausgestaltet ist, um eine Achse (A) drehangetrieben zu werden, und mindestens einen ersten Teil (6), "Oberteil" genannt, und einen zweiten Teil (5), "Unterteil" genannt, aufweist,
- ein Spiralgehäuse (17), welches das Laufrad (2) umgibt und einen Spiralgehäuseauslass (17a) aufweist, der sich hauptsächlich entlang einer Achse (B) erstreckt,
- ein Lufteinlassgehäuse (21), das mindestens zwei verschiedene Lufteinlässe (24, 26) aufweist, und
- eine Trennwand (14), die sich derart erstreckt, dass sie einen ersten Luftstrom, der dazu bestimmt ist, den ersten axialen Teil (6) des Laufrads (2) zu durchqueren, und einen zweiten Luftstrom, der dazu bestimmt ist, den zweiten axialen Teil (5) des Laufrads (2) zu durchqueren, trennt,
**dadurch gekennzeichnet, dass** die Trennwand (14) ein stromaufwärtiges Ende (141) aufweist, das sich in dem Lufteinlassgehäuse (21) entlang einer Haupterstreckungsrichtung senkrecht zu der Erstreckungsachse (B) des Spiralgehäuseauslasses (17a) und zu der Drehachse (A) des Laufrads (2) erstreckt, und wobei:
- das Lufteinlassgehäuse (21) einen Innenraum umfasst, der einen Luftdurchgangsquerschnitt begrenzt, der ein erstes Maß (d1) entlang einer Richtung senkrecht zu der Erstreckungsachse (B) des Spiralgehäuseauslasses (17a) und ein zweites Maß (d2) parallel zu der Erstreckungsachse (B) des Spiralgehäuseauslasses (17a) aufweist, und wobei
- das stromaufwärtige Ende (141) der Trennwand (14) sich über das gesamte erste Maß (d1) und über einen Teil des zweiten Maßes (d2) erstreckt,
- das Gebläse mindestens drei koaxiale Klappen (27, 28, 30) umfasst, nämlich eine zentrale Klappe (27) und zwei beiderseits der zentralen Klappe (27) angeordnete seitliche Klappen (28, 30), wobei die koaxialen Klappen (27, 28, 30) zwischen den zwei verschiedenen Lufteinlässen (24, 26) des Lufteinlassgehäuses (21) um eine Schwenkachse (33) beweglich angeordnet sind, die zu der Erstreckungsachse (B) des Spiralgehäuseauslasses (17a) parallel sind,
- die koaxialen Klappen (27, 28, 30) jeweils zwischen einer ersten Endlage, in der die Klappe (27, 28, 30) einen ersten Lufteinlass (26) verschließt, und einer zweiten Endlage, in der die Klappe (27, 28, 30) den anderen Lufteinlass (24) verschließt, beweglich angeordnet sind,
- das Gebläse außerdem eine zusätzliche Trennwand (39) aufweist, die in dem Lufteinlassgehäuse (21) so angeordnet ist, dass sie einen Endbereich der zentralen Klappe (27) in einer Endlage wenigstens teilweise umgibt,
- die zusätzliche Trennwand (39) einen Rahmen (391) aufweist, der sich hauptsächlich entlang einer zu der Erstreckungsachse (B) des Spiralgehäuseauslasses (17a) senkrechten Erstrekungsrichtung erstreckt, und senkrecht über dem sich ein Gürtel (395) so erstreckt, dass er einen Endbereich der zentralen Klappe (27) in einer Endlage wenigstens teilweise umgibt, wobei der Rahmen (391) gegenüber dem stromaufwärtigen Ende (141) der Trennwand (14) angeordnet ist, wobei der Rahmen (391) eine Form hat, die zu der Form des stromaufwärtigen Endes (141) der Trennwand (39) komplementär ist.

2. Ansauggebläse (1) nach dem vorhergehenden Anspruch, wobei der Rahmen (391) der zusätzlichen Trennwand (39) mindestens einen Anschlag aufweist und die zentrale Klappe (27) dafür ausgelegt ist, an diesem in einer Endlage zur Anlage zu kommen.

3. Ansauggebläse (1) nach einem der vorhergehenden Ansprüche, welches außerdem ein Filter (35) aufweist, das axial zwischen der Trennwand (14) und der zusätzlichen Trennwand (39) angeordnet ist.

4. Heizungs-, Lüftungs- und/oder Klimatisierungsvorrichtung, **dadurch gekennzeichnet, dass** sie ein Ansauggebläse (1) nach einem der vorhergehenden Ansprüche umfasst.

## Claims

1. Intake blower (1), notably for a heating, ventilation and/or air-conditioning device of a motor vehicle, the blower (1) comprising:
- a turbine (2) designed to be driven in rotation about an axis (A) and having at least a first part (6) referred to as the "upper part" and a second part (5) referred to as the "lower part",
- a blower housing (17) surrounding the turbine (2) and having a blower housing outlet (17a) extending mainly along an axis (B),
- an air inlet housing (21) having at least two separate air inlets (24, 26), and
- a dividing partition (14) extending so as to separate a first air flow intended to pass through the first axial part (6) of the turbine (2) from a second air flow intended to pass through the second axial part (5) of the turbine (2),
**characterized in that** the dividing partition (14) has an upstream end (141) extending into the air inlet housing (21) in a main direction of extension orthogonal to the axis (B) of extension of the blower housing outlet (17a) and to the axis (A) of rotation of the turbine (2), and wherein:
- the air inlet housing (21) comprises an internal space delimiting an air flow area having a first dimension (d1) in a direction orthogonal to the axis (B) of extension of the blower housing outlet (17a) and a second dimension (d2) parallel to the axis (B) of extension of the blower housing outlet (17a), and wherein
- the upstream end (141) of the dividing partition (14) extends over the entirety of the first dimension (d1) and over a part of the second dimension (d2),
- the blower comprising at least three coaxial shutters (27, 28, 30), including a central shutter (27) and two lateral shutters (28, 30) that are arranged on both sides of the central shutter (27), said coaxial shutters (27, 28, 30) being arranged between said two separate air inlets (24, 26) of the air inlet housing (21), moveably about a pivot axis (33) parallel to the axis (B) of extension of the blower housing outlet (17a),
- each of said coaxial shutters (27, 28, 30) being arranged moveably between a first end position, in which said shutter (27, 28, 30) closes an air inlet (26), and a second end position, in which said shutter (27, 28, 30) closes the other air inlet (24),
- said blower further comprising an additional dividing partition (39) arranged in the air inlet housing (21) such as to at least partially surround an end region of the central shutter (27) in an end position,
- the additional dividing partition (39) having a frame (391) extending mainly in a direction of extension orthogonal to the axis (B) of extension of the blower housing outlet (17a), and a belt (395) extends vertically from said frame to at least partially surround an end region of the central shutter (27) in an end position, the frame (391) being arranged opposite the upstream end (141) of the dividing partition (14), the frame (391) being complementary in shape to the upstream end (141) of the dividing partition (39).

2. Intake blower (1) according to the preceding claim, wherein the frame (391) of the additional dividing partition (39) has at least one stop, against which the central shutter (27) is designed to stop in an end position.

3. Intake blower (1) according to one of the preceding claims, further comprising a filter (35) arranged axially between the dividing partition (14) and the additional dividing partition (39).

4. Heating, ventilation and/or air-conditioning device **characterized in that** it comprises an intake blower (1) according to any one of the preceding claims.
